(19) Europäisches Patentamt
European Patent Office
Office européen des brevets

(11) **EP 4 213 262 A1**

(12) **EUROPEAN PATENT APPLICATION**

(43) Date of publication:
**19.07.2023 Bulletin 2023/29**

(21) Application number: **22216466.7**

(22) Date of filing: **23.12.2022**

(51) International Patent Classification (IPC):
***H01M 10/052*** (2010.01)    ***H01M 4/02*** (2006.01)

(52) Cooperative Patent Classification (CPC):
**H01M 10/052;** H01M 2004/021; H01M 2004/027;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2022 KR 20220005156**

(71) Applicant: **SK On Co., Ltd.**
**Seoul 03161 (KR)**

(72) Inventors:
• **JIN, Jae Kyu**
**34124 Daejeon (KR)**
• **KIM, Jeong A**
**34124 Daejeon (KR)**
• **KIM, Sung Do**
**34124 Daejeon (KR)**

(74) Representative: **Prüfer & Partner mbB**
**Patentanwälte · Rechtsanwälte**
**Sohnckestraße 12**
**81479 München (DE)**

(54) **SECONDARY BATTERY HAVING LOW CELL RESISTANCE AND EXCELLENT LIFESPAN CHARACTERISTICS**

(57)    The present disclosure relates to a secondary battery having a low cell resistance and excellent lifespan characteristics. According to an exemplary embodiment, there is provided a secondary battery including: a cathode including a cathode current collector and a cathode active material layer formed on at least one surface of the cathode current collector; and an anode including an anode current collector and an anode active material layer formed on at least one surface of the anode current collector, wherein a value of $K_1$ represented by the following Expression (1) is 130 to 270:

$$(1) \quad (200 * A_R + C_R + 20 * C_{IR}) * (1 + C_A) / C_P$$

in Expression (1), $A_R$ is a bulk resistance ($\Omega \cdot cm$) of the anode, $C_R$ is a bulk resistance ($\Omega \cdot cm$) of the cathode, $C_{IR}$ is an interfacial resistance ($\Omega \cdot cm^2$) between the cathode active material layer and the cathode current collector, $C_P$ is 1 - D/4.7, D is a pressed density (g/cc) of the cathode, and $C_A$ is an adhesive force (N/18 mm) between the cathode active material layer and the cathode current collector.

FIG. 1

EP 4 213 262 A1

**Description**

**TECHNICAL FIELD**

The following disclosure relates to a secondary battery having a low cell resistance and excellent lifespan characteristics.

**BACKGROUND**

Recently, global warming issues and the demand for eco-friendly technologies as a response to the issues have rapidly increased. In particular, in accordance with an increase in technical demand for an electric vehicle and an energy storage system (ESS), the demand for a lithium secondary battery, which has been spotlighted as an energy storage device, has also exploded. In order to implement an electric vehicle having excellent performance, the development of a secondary battery having a high output, a low resistance, a large capacity, and a long-term cycle life is required.

In order to develop a secondary battery having a high output and a long lifespan, an evaluation period for resistance of the secondary battery may be relatively short, but an evaluation period for a cycle life requires a long time. In order to shorten a development period, a method of predicting a cycle life of a secondary battery is required.

**SUMMARY**

An embodiment of the present disclosure is directed to providing a secondary battery having a low cell resistance and excellent lifespan characteristics.

Another embodiment of the present disclosure is directed to easily predict a cycle life of a secondary battery without assembling and driving the secondary battery for evaluating the cycle life for a long time by presenting a relationship between an adhesive force between an electrode and a substrate, a density of the electrode, a resistance of the electrode, and the like, and a resistance and a cycle life of the secondary battery.

In one general aspect, a secondary battery includes: a cathode including a cathode current collector and a cathode active material layer formed on at least one surface of the cathode current collector; and an anode including an anode current collector and an anode active material layer formed on at least one surface of the anode current collector, wherein a value of $K_1$ represented by the following Expression (1) is 130 to 270:

$$(1) \quad (200{*}A_R + C_R + 20{*}C_{IR}){*}(1 + C_A)/C_P$$

in Expression (1), $A_R$ is a bulk resistance ($\Omega \cdot cm$) of the anode, $C_R$ is a bulk resistance ($\Omega \cdot cm$) of the cathode, $C_{IR}$ is an interfacial resistance ($\Omega \cdot cm^2$) between the cathode active material layer and the cathode current collector, $C_P$ is 1 - D/4.7, D is a pressed density (g/cc) of the cathode, and $C_A$ is an adhesive force (N/18 mm) between the cathode active material layer and the cathode current collector.

A value of $K_2$ represented by the following Expression (2) may be 18.0 or more:

$$(2) \quad 200{*}A_R + (C_R + 10{*}C_{IR})$$

in Expression (2), $A_R$ is a bulk resistance ($\Omega \cdot cm$) of the anode, $C_R$ is a bulk resistance ($\Omega \cdot cm$) of the cathode, and $C_{IR}$ is an interfacial resistance ($\Omega \cdot cm^2$) between the cathode active material layer and the cathode current collector.

The bulk resistance $A_R$ of the anode may be 0.005 to 0.2 $\Omega \cdot cm$.

The bulk resistance $C_R$ of the cathode may be 1 to 100 $\Omega \cdot cm$.

The interfacial resistance $C_{IR}$ between the cathode active material layer and the cathode current collector may be 0.01 to 1.0 $\Omega \cdot cm^2$.

The adhesive force $C_A$ between the cathode active material layer and the cathode current collector may be 0.05 to 2.0 N/18 mm.

The pressed density D of the cathode may be 3.00 to 3.90 g/cc.

Other features and aspects will be apparent from the following detailed description, the drawings, and the claims.

**BRIEF DESCRIPTION OF THE DRAWINGS**

FIG. 1 is a graph showing a cell resistance (DC-IR) of a secondary battery according to a value of $K_1$.
FIG. 2 is a graph showing a capacity retention rate of the secondary battery according to the value of $K_1$.
FIG. 3 is a graph showing a capacity retention rate of the secondary battery according to a value of $K_2$.

**DETAILED DESCRIPTION OF EMBODIMENTS**

The advantages and features of the present disclosure and methods of accomplishing them will become apparent from exemplary embodiments described in detail with the accompanying drawings. However, the present disclosure is not limited to exemplary embodiments to be described below, but may be implemented in various different forms. These exemplary embodiments will be provided only in order to make the present disclosure complete and allow those skilled in the art to completely recognize the scope of the present disclosure, and the present disclosure will be defined by the scope of the claims. Specific contents for implementing the present disclosure will be described in detail with reference to the accompanying drawings. The same reference numerals refer to the same components regardless of the drawings. The term "and/or" includes any and all combinations of one or more of the listed items.

Unless defined otherwise, all terms (including technical and scientific terms) used in the present specification have the same meanings as commonly understood by those skilled in the art to which the present disclosure pertains. Throughout the present specification, unless explicitly described to the contrary, "comprising" any components will be understood to imply further inclusion of other components rather than the exclusion of any other components. In addition, the singular forms are intended to include the plural forms, unless the context clearly indicates otherwise.

In the present specification, it will be understood that when an element such as a layer, a film, a region, a plate, or the like, is referred to as being "on" or "above" another element, it may be directly on another element or may have an intervening element present therebetween.

In order to design a low cell resistance, a method of designing a low resistance of an electrode may be used, but it is impossible to predict a cycle life of a battery only with the resistance of the electrode. The present inventors have repeatedly studied and confirmed that a resistance and a cycle life of a secondary battery are related to an adhesive force between an electrode and a substrate, a pressed density of the electrode, a resistance of the electrode, and the like.

In the present exemplary embodiment, there is provided a secondary battery including: a cathode including a cathode current collector and a cathode active material layer formed on at least one surface of the cathode current collector; and an anode including an anode current collector and an anode active material layer formed on at least one surface of the anode current collector, wherein a value of $K_1$ represented by the following Expression (1) is 130 to 270:

$$(1) \quad (200 * A_R + C_R + 20 * C_{IR}) * (1 + C_A) / C_P$$

in Expression (1), $A_R$ is a bulk resistance ($\Omega \cdot cm$) of the anode, $C_R$ is a bulk resistance ($\Omega \cdot cm$) of the cathode, $C_{IR}$ is an interfacial resistance ($\Omega \cdot cm^2$) between the cathode active material layer and the cathode current collector, $C_P$ is 1 - D/4.7, D is a pressed density (g/cc) of the cathode, and $C_A$ is an adhesive force (N/18 mm) between the cathode active material layer and the cathode current collector.

Specifically, according to an exemplary embodiment, the value of $K_1$ is controlled within a range of 130 to 270, such that it is possible to provide a secondary battery having a low cell resistance and satisfying an excellent cycle life. The cell resistance tends to be decreased as the value of $K_1$ is decreased, and when the value of $K_1$ is less than 130, the cycle life may be rapidly reduced. When the value of $K_1$ exceeds 270, the cell resistance is too high, which may cause deterioration of output performance of the battery.

From the viewpoint of securing a more excellent cycle life and a lower cell resistance, the value of $K_1$ may be 140 to 270, 130 to 250, 140 to 250, 130 to 230, or 140 to 230.

Expression (1) may be derived by substituting the following measured values. $K_1$ represented by Expression (1) is derived by parameterizing the effect obtained by organically combining $A_R$, $C_R$, $C_{IR}$, $C_P$, and $C_A$ on the cell resistance and the cycle life as a whole. Therefore, the value of $K_1$ represented by Expression (1) may be derived from numerical values excluding the units of the measured values of $A_R$, $C_R$, $C_{IR}$, $C_P$, and $C_A$ as follows. For example, when the measured value of the bulk resistance $A_R$ of the anode is "0.05 $\Omega \cdot cm$", $K_1$ is derived by substituting "0.05" excluding the unit into Expression (1).

The bulk resistance $A_R$ of the anode and the bulk resistance $C_R$ of the cathode may be measured with an electrode resistance measuring instrument (XF057, manufactured by Hioki E.E. Corporation) under conditions of a measurement current of 10 mA and a measurement voltage of 0.5 V.

The interfacial resistance $C_{IR}$ between the cathode active material layer and the cathode current collector may be measured with the electrode resistance measuring instrument (XF057, manufactured by Hioki E.E. Corporation) under conditions of a measurement current of 100 uA or 1 mA and a measurement voltage of 1 V or 10 V.

The pressed density D of the cathode is calculated by measuring a weight and a thickness of a unit area of the pressed electrode. $C_P$ may be derived by substituting the calculated pressed density D of the cathode into the following expression "1 - D/4.7".

The adhesive force $C_A$ between the cathode active material layer and the cathode current collector may be measured with an adhesive force measuring instrument (DS2-50N, manufactured by Imada, Inc.) for the electrode and the substrate. The measurement method may be as follows. A double-sided tape is attached to an adhesive force measuring jig, a side of the prepared cathode current collector is placed on the tape, and then a roller is reciprocated 10 times to attach the cathode to the tape. Thereafter, the tape is cut to a width of 18 mm and attached to the central portion of the measuring jig so that the tape surface faces down. Thereafter, an adhesive force to the cathode active material layer is measured while moving the adhesive force measuring instrument at a speed of 300 rpm.

In the secondary battery according to an exemplary embodiment, the value of $K_1$ may satisfy the above range, and a value of $K_2$ represented by the following Expression (2) may be 18.0 or more.

$$(2)\ 200*A_R + (C_R + 10*C_{IR})$$

In Expression (2), $A_R$ is a bulk resistance of the anode, $C_R$ is a bulk resistance of the cathode, and $C_{IR}$ is an interfacial resistance between the cathode active material layer and the cathode current collector. $A_R$, $C_R$, and $C_{IR}$ in Expression (2) may be calculated by substituting the measured values in the same manner as in Expression (1). $K_2$ represented by Expression (2) is derived by parameterizing the effect obtained by organically combining $A_R$, $C_R$, and $C_{IR}$ on the cell resistance and the cycle life as a whole. Therefore, the value of $K_2$ represented by Expression (2) may be derived from numerical values excluding the units of the measured values of $A_R$, $C_R$, and $C_{IR}$, similarly to the method of deriving the value of $K_1$.

The value of $K_2$ is not particularly limited on the premise that the above range is satisfied, and may be, for example, 18.0 to 50.0, 18.0 to 45.0, 18.0 to 40.0, 18.0 to 35.0, or 18.0 to 29.0.

When a content of a conductive material is high, the resistance of the electrode may be low. However, when a content of a binder is not sufficient, a binding force between the conductive material and the active material particles and an adhesive force between the current collectors may be insufficient, and thus the lifespan characteristics may be deteriorated. In order to secure excellent lifespan characteristics and a low cell resistance, it is important to adjust the contents of the conductive material and the binder in an appropriate ratio. However, it is not preferable because it still takes a long time to evaluate the cycle life of the battery only by appropriately adjusting the ratio of the contents of the conductive material and the binder. According to an exemplary embodiment, for more excellent lifespan characteristics, in a case where excellent lifespan characteristics are secured by utilizing the value of $K_2$ related to the resistance of each of the cathode and the anode, and the like, and the range of the value of $K_1$ and the value of $K_2$ of 18.0 or more are satisfied, more excellent lifespan characteristics and a lower cell resistance may be secured.

From the viewpoint of securing a more excellent cycle life and a lower cell resistance, the value of $K_2$ may be, for example, 18.5 or more or 19.0 or more.

The range of the value of each of the bulk resistance $A_R$ of the anode, the bulk resistance $C_R$ of the cathode, the interfacial resistance $C_{IR}$ between the cathode active material layer and the cathode current collector, $C_P$ derived from "1 - D/4.7" (D is the pressed density (g/cc) of the cathode), and the adhesive force $C_A$ between the cathode active material layer and the cathode current collector is not particularly limited on the premise that the range of the value of $K_1$ or $K_2$ is satisfied, but may be, for example, as follows.

As for the cathode of the secondary battery, according to an exemplary embodiment, the bulk resistance $C_R$ of the cathode may be 1 to 100 $\Omega\cdot$cm, and specifically, the bulk resistance $C_R$ of the cathode may be, for example, 3 to 30 $\Omega\cdot$cm, 6 to 18 $\Omega\cdot$cm, 12 to 50 $\Omega\cdot$cm, 12 to 30 $\Omega\cdot$cm, or 12 to 20 $\Omega\cdot$cm.

As for the cathode of the secondary battery, according to an exemplary embodiment, the interfacial resistance $C_{IR}$ between the cathode active material layer and the cathode current collector may be 0.01 to 1.0 $\Omega\cdot$cm$^2$, and specifically, the interfacial resistance $C_{IR}$ may be, for example, 0.02 to 0.5 $\Omega\cdot$cm$^2$, 0.04 to 0.17 $\Omega\cdot$cm$^2$, 0.05 to 0.10 $\Omega\cdot$cm$^2$, or 0.05 to 0.09 $\Omega\cdot$cm$^2$.

As for the cathode of the secondary battery, according to an exemplary embodiment, the pressed density D of the cathode may be 3.00 to 3.90 g/cc, and specifically, the pressed density D of the cathode may be, for example, 3.50 to 3.85 g/cc or 3.60 to 3.80 g/cc. According to an exemplary embodiment, $C_P$ derived by utilizing the pressed density D of the cathode may be 0.17 to 0.36, 0.17 to 0.211, 0.17 to 0.205, 0.18 to 0.26, 0.18 to 0.205, 0.19 to 0.205, 0.2 to 0.205 or 0.19 to 0.23. Since $C_P$ is calculated by parameterizing the effect of the pressed density D of the cathode on the cell resistance and the lifespan characteristics, and the unit thereof is omitted.

As for the cathode of the secondary battery, according to an exemplary embodiment, the adhesive force $C_A$ between the cathode active material layer and the cathode current collector may be 0.05 to 2.0 N/18 mm, and specifically, the adhesive force $C_A$ may be, for example, 0.1 to 1.0 N/18 mm, 0.2 to 0.7 N/18 mm, 0.49 to 1.0 N/18 mm, 0.49 to 0.7 N/18 mm, 0.52 to 1.0 N/18 mm, or 0.52 to 0.7 N/18 mm.

As for the anode of the secondary battery, according to an exemplary embodiment, the bulk resistance $A_R$ of the anode may be 0.005 to 0.2 $\Omega{\cdot}$cm, and specifically, the bulk resistance $A_R$ of the anode may be, for example, 0.01 to 0.1 $\Omega{\cdot}$cm, 0.01 to 0.04 $\Omega{\cdot}$cm, 0.01 to 0.034 $\Omega{\cdot}$cm, 0.01 to 0.03 $\Omega{\cdot}$cm, 0.015 to 0.06 $\Omega{\cdot}$cm, 0.015 to 0.04 $\Omega{\cdot}$cm, 0.015 to 0.034 $\Omega{\cdot}$cm, or 0.015 to 0.03 $\Omega{\cdot}$cm.

The cathode of the secondary battery according to an exemplary embodiment includes the cathode current collector and the cathode active material layer formed on at least one surface of the cathode current collector.

The current collector may be selected from the group consisting of a copper foil, a nickel foil, a stainless steel foil, a titanium foil, a nickel foam, a copper foam, a polymer substrate coated with a conductive metal, and a combination thereof, but is not limited thereto.

The cathode active material layer may include a cathode active material, and may optionally further include a binder, a conductive material, and a dispersant. As the cathode active material, a cathode active material known in the art may be used, and as a non-limiting example, a composite oxide of lithium and a metal selected from cobalt, manganese, nickel, and a combination thereof may be used.

The binder serves to well adhere cathode active material particles to each other and also to well adhere the cathode active material to the current collector. As a non-limiting example, the binder may be polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, styrene-butadiene rubber (SBR), fluoro rubber, or one or a combination of these copolymers.

The conductive material is used for imparting conductivity to the cathode, and any material may be used as long as it is an electric conductive material that does not cause a chemical change in a battery to be configured. As a non-limiting example, the conductive material may include a carbon-based material of one or a combination of natural graphite, artificial graphite, carbon black, acetylene black, Ketjen black, a carbon fiber, a multi-walled carbon nanotube (MWCNT), and a single-walled carbon nanotube (SWCNT); a metal-based material of one or a combination of metal powders or metal fibers of copper, nickel, aluminum, silver, and the like; a conductive polymer of a polyphenylene derivative; or a mixture thereof.

Each of contents of the binder and the conductive material in the cathode active material layer may be, for example, 1 to 10 wt%, and preferably 1 to 5 wt%, with respect to the total weight of the cathode active material layer, but is not limited thereto.

The dispersant is used to improve the dispersibility of the cathode active material, and any dispersant used in a secondary battery may be used. As a non-limiting example, the dispersant may be an organic dispersant such as hydrogenated nitrile butadiene rubber or polyvinyl pyrrolidone.

The cathode may be prepared by a common cathode preparation method. According to an exemplary embodiment, the cathode may be prepared by applying, onto a cathode current collector, a composition for forming a cathode active material layer produced by dissolving or dispersing a cathode active material and optionally a binder, a conductive material, and a dispersant in a solvent, and then performing drying and rolling.

The solvent may be a solvent generally used in the art. As a non-limiting example, the solvent may be one or a mixture of two or more of dimethyl sulfoxide (DMSO), isopropyl alcohol, N-methyl pyrrolidone (NMP), acetone, and water. The amount of the solvent used is sufficient as long as it has a viscosity capable of allowing the cathode active material, the conductive material, and the binder to be dissolved or dispersed and exhibiting excellent thickness uniformity when applied for preparing a cathode in consideration of an application thickness and a preparation yield of a slurry.

In addition, according to another exemplary embodiment, the cathode may be prepared by casting the composition for forming a cathode active material layer on a separate support and then laminating a film obtained by separation from the support on a cathode current collector.

The anode of the secondary battery according to an exemplary embodiment includes an anode current collector and an anode active material layer formed on at least one surface of the anode current collector, and may be prepared by applying an anode slurry containing an anode active material onto the anode current collector.

The cathode current collector described above may be used as the current collector, and any material known in the art may be used, but the present disclosure is not limited thereto.

The anode active material layer may include an anode active material, and may optionally further include a binder, a conductive material, and a dispersant.

The anode active material may optionally include a material capable of reversibly intercalating and deintercalating lithium ions, a lithium metal, a lithium metal alloy, a material capable of doping and dedoping lithium, or a transition metal oxide.

Examples of the material capable of reversibly intercalating and deintercalating lithium ions include a carbon material, that is, a carbon-based anode active material generally used in a lithium secondary battery. As a representative example of the carbon-based anode active material, crystalline carbon, amorphous carbon, or a combination thereof may be used. Examples of the crystalline carbon include graphite such as natural graphite or artificial graphite having an amorphous shape, a plate shape, a flake shape, a spherical shape, or a fibrous shape. Examples of the amorphous carbon include soft carbon or hard carbon, mesophase pitch carbide, and calcined coke.

As the lithium metal alloy, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

Examples of the material capable of doping and dedoping lithium include silicon-based materials such as Si, $SiO_x$ ($0 < x < 2$), a Si-Q alloy (Q is an element selected from the group consisting of an alkali metal, an alkaline earth metal, a Group 13 element, a Group 14 element, a Group 15 element, a Group 16 element, a transition metal, a rare earth element, and a combination thereof, but is not Si), a Si-carbon composite, Sn, $SnO_2$, a Sn-R alloy (R is an element selected from the group consisting of an alkali metal, an alkaline earth metal, a Group 13 element, a Group 14 element, a Group 15 element, a Group 16 element, a transition metal, a rare earth element, and a combination thereof, but is not Sn), and a Sn-carbon composite. A mixture obtained by mixing at least one of these silicon-based materials and $SiO_2$ may be used. As the elements Q and R, an element selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof may be used.

Lithium titanium oxide may be used as the transition metal oxide.

The cathode binder, the cathode conductive material, and the cathode dispersant described above may be used as the binder, the conductive material, and the dispersant, and any material known in the art may be used. However, the present disclosure is not limited thereto.

The anode may be prepared by a common anode preparation method. According to an exemplary embodiment, the anode may be prepared by applying, onto an anode current collector, a composition for forming an anode active material layer produced by dissolving or dispersing an anode active material and optionally a binder, a conductive material, and a dispersant in a solvent, and then performing drying, or by casting the composition for forming an anode active material layer on a separate support and then laminating a film obtained by separation from the support on an anode current collector.

The secondary battery according to an exemplary embodiment may further include a separator interposed between the cathode and the anode, and an electrolyte.

The separator may be selected from a glass fiber, polyester, polyethylene, polypropylene, polytetrafluoroethylene, and a combination thereof, and may be in a form of a nonwoven fabric or a woven fabric. In a lithium secondary battery, for example, a polyolefin-based polymer separator formed of polyethylene, polypropylene, or the like may be mainly used, a separator coated with a composition containing a ceramic component or a polymer material to secure heat resistance or mechanical strength may be used, or a separator that may be selectively used with a single layer or multilayer structure and is known in the art may be used, but the present disclosure is not limited thereto.

The electrolyte contains an organic solvent and a lithium salt.

The organic solvent functions as a medium through which ions involved in an electrochemical reaction of the battery may move. For example, a carbonate-based solvent, an ester-based solvent, an ether-based solvent, a ketone-based solvent, an alcohol-based solvent, or an aprotic solvent may be used. The organic solvents may be used alone or as a mixture of two or more thereof. When a mixture of two or more organic solvents is used, a mixing ratio may be appropriately adjusted according to a desired battery performance. Meanwhile, an organic solvent known in the art may be used, but the present disclosure is not limited thereto.

The lithium salt is dissolved in the organic solvent, acts as a supply source of the lithium ions in the battery to allow a basic operation of the lithium secondary battery, and serves to promote movement of the lithium ions between the cathode and the anode. Examples of the lithium salt include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, LiI, $LiB(C_2O_4)_2$, and a combination thereof. However, the present disclosure is not limited thereto.

A concentration of the lithium salt may be, for example, 0.1 M to 2.0 M. When the concentration of the lithium salt is within the above range, the electrolyte has appropriate conductivity and viscosity, and thus, an excellent performance of the electrolyte may be exhibited and the lithium ions may effectively move.

In addition, in order to improve charging and discharging characteristics, flame retardancy properties, and the like, the electrolyte may further contain pyridine, triethyl phosphate, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like, if necessary. In some cases, in order to impart non-flammability, the electrolyte may further contain a halogen-containing solvent such as carbon tetrachloride or ethylene trifluoride, and in order to improve high-temperature storage characteristics, the electrolyte may further contain fluoro-ethylene carbonate (FEC), propane sultone (PRS), fluoro-propylene carbonate (FPC), and the like.

In a method of manufacturing a secondary battery according to the present exemplary embodiment in order to achieve the objects as described above, a battery may be manufactured by sequentially stacking the prepared anode, separator, and cathode to form an electrode assembly, putting the formed electrode assembly into a cylindrical battery case or a prismatic battery case, and then injecting an electrolyte. Alternatively, a battery may be manufactured by stacking the electrode assembly, impregnating the electrode assembly with an electrolyte, putting the resulting product into a battery case, and sealing the battery case.

As the battery case used in the present disclosure, a battery case commonly used in the art may be adopted. An external shape according to the use of the battery is not limited, for example, a cylindrical, prismatic, pouch, or coin type case using a can may be used.

The secondary battery according to the present disclosure may be used as a battery cell used as a power source for a small device, and may also be preferably used as a unit cell in a medium and large sized battery module including a plurality of battery cells. Preferred examples of the medium and large device include, but are not limited to, an electric vehicle, a hybrid electric vehicle, a plug-in hybrid electric vehicle, and a power storage system.

The secondary battery may be, but is not limited to, a lithium secondary battery.

Hereinafter, preferred Examples and Comparative Examples of the present exemplary embodiment will be described. However, each of the following Examples is merely a preferred example of the present exemplary embodiment, and the present disclosure is not limited to the following Examples.

**(Examples)**

**Example 1**

1. Preparation of Anode

An artificial graphite anode active material (D50: 13 pm), a silicon-based anode active material, a CMC thickener, an SBR binder, a multi-walled carbon nanotube (MWCNT) conductive material, and a dispersant were mixed at a weight ratio of 91.6:5.0:1.3:1.5:0.5:0.1 using water as a solvent to prepare an anode slurry.

The prepared anode slurry was applied onto one surface of a copper foil having a thickness of 8 $\mu$m using a slot die and then drying was performed, and the anode slurry was applied onto the other surface in the same manner and then drying was performed. The dried anode was coated with a weight of 9.3 mg/cm$^2$ and then rolled to prepare an anode (pressed density: 1.69 g/cc) in which an anode active material layer was formed on a current collector.

2. Preparation of Cathode

An active material A having a Ni content of 88% and an active material B having a Ni content of 83% as cathode active materials, a multi-walled carbon nanotube (MWCNT) and carbon black as cathode conductive materials, a dispersant, and polyvinylidene fluoride (PVdF) as a cathode binder were mixed at a weight ratio of 78.0:19.5:0.4:0.8:0.1:1.2 to prepare a cathode slurry.

The prepared cathode slurry was uniformly applied to an aluminum foil having a thickness of 12 pm, and then drying was performed. The dried cathode was coated with a weight of 21.6 mg/cm$^2$ and then rolled to prepare a cathode (pressed density: 3.71 g/cc) in which a cathode active material layer was formed on a current collector.

3. Manufacture of Secondary Battery

The cathode and the anode were notched with predetermined sizes and stacked, a separator (polyethylene, thickness of 13 $\mu$m) was interposed between the cathode and the anode to form an electrode cell, and then each tab portion of the cathode and the anode was welded. The welded cathode/separator/anode assembly was inserted into a pouch, and three sides of the pouch except for an electrolyte injection side were sealed. At this time, portions including an electrode tab were included in sealed portions. An electrolyte was injected through the sides except for the sealing portions, the remaining sides were also sealed, and then the pouch was impregnated for 12 hours or longer. The electrolyte was prepared by dissolving 1 M LiPF$_6$ in a mixed solvent of EC/EMC/DEC (25/45/30: volume ratio) and then adding 2 wt% of fluoroethylene carbonate (FEC).

Thereafter, pre-charging was performed at a current of 0.25 C for 36 minutes. Degassing was performed after 1 hour, aging was performed for 24 hours or longer, and then chemical charging and discharging were performed (charging conditions: CC-CV, 0.2 C, 4.2 V, 0.05 C, CUT-OFF, discharging conditions: CC, 0.2 C, 2.5 V, CUT-OFF). Thereafter, standard charging and discharging were performed (charging conditions: CC-CV, 0.33 C, 4.2 V, 0.05 C, CUT-OFF, discharging conditions: CC, 0.33 C, 2.5 V, CUT-OFF).

**Example 2**

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) and carbon black as cathode conductive materials, a dispersant, and polyvinylidene fluoride (PVdF) as a cathode binder at a weight ratio of 68.22:29.3:0.4:0.8:0.08:1.2, and a weight and a pressed density of the prepared cathode were 21.0 mg/cm$^2$ and 3.74 g/cc, respectively.

Except for this, an anode was prepared and a battery was manufactured in the same manner as that of Example 1.

**Example 3**

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 92.95:4.0:1.3:1.5:0.1:0.15 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) and carbon black as cathode conductive materials, a dispersant, and polyvinylidene fluoride (PVdF) as a cathode binder at a weight ratio of 78.22:19.5:0.4:0.8:0.08:1.0, and a weight and a pressed density of the prepared cathode were 21.0 mg/cm$^2$ and 3.74 g/cc, respectively.

Except for this, a battery was manufactured in the same manner as that of Example 1.

**Example 4**

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 92.05:5.0:1.2:1.5:0.1:0.15 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) as a cathode conductive material, a dispersant, and polyvinylidene fluoride (PVdF) as a cathode binder at a weight ratio of 78.7:19.7:0.5:0.1:1.0, and a weight and a pressed density of the prepared cathode were 20.8 mg/cm$^2$ and 3.73 g/cc, respectively.

Except for this, a battery was manufactured in the same manner as that of Example 1.

**Example 5**

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 91.85:5.0:1.2:1.7:0.1:0.15 and using water as a solvent.

A cathode was prepared in the same manner as that of Example 1, except that a cathode slurry was prepared by mixing an active material D having a Ni content of 88% as a cathode active material, a multi-walled carbon nanotube (MWCNT) as a cathode conductive material, a dispersant, and polyvinylidene fluoride (PVdF) as a cathode binder at a weight ratio of 98.4:0.5:0.1:1.0, and a weight and a pressed density of the prepared cathode were 21.2 mg/cm$^2$ and 3.81 g/cc, respectively.

Except for this, a battery was manufactured in the same manner as that of Example 1.

**Example 6**

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 91.05:6.0:1.2:1.5:0.1:0.15 and using water as a solvent.

A cathode was prepared in the same manner as that of Example 1, except that a cathode slurry was prepared by mixing an active material D having a Ni content of 88% as a cathode active material, a multi-walled carbon nanotube (MWCNT) as a cathode conductive material, a dispersant, and polyvinylidene fluoride (PVdF) as a cathode binder at a weight ratio of 98.4:0.5:0.1:1.0, and a weight and a pressed density of the prepared cathode were 21.2 mg/cm$^2$ and 3.81 g/cc, respectively.

Except for this, a battery was manufactured in the same manner as that of Example 1.

## Comparative Example 1

An anode was prepared in the same manner as that of Example 1, except that an anode slurry was prepared by mixing an artificial graphite anode active material (D50: 13 pm), a silicon-based anode active material, a CMC thickener, an SBR binder, a multi-walled carbon nanotube (MWCNT) conductive material, and a dispersant at a weight ratio of 90.8:6.0:1.3:1.3:0.5:0.1 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) as a cathode conductive material, a dispersant, and polyvinylidene fluoride (PVdF) as a cathode binder at a weight ratio of 78.7:19.8:0.4:0.1:1.0, and a weight and a pressed density of the prepared cathode were 17.5 mg/cm$^2$ and 3.67 g/cc, respectively.

Except for this, an anode was prepared and a battery was manufactured in the same manner as that of Example 1.

## Comparative Example 2

An anode was prepared in the same manner as that of Example 1, except that an anode slurry was prepared by mixing an artificial graphite anode active material (D50: 13 pm), a silicon-based anode active material, a CMC thickener, an SBR binder, a multi-walled carbon nanotube (MWCNT) conductive material, and a dispersant at a weight ratio of 90.8:6.0:1.3:1.3:0.5:0.1 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) as a cathode conductive material, a dispersant, and polyvinylidene fluoride (PVdF) as a cathode binder at a weight ratio of 78.7:19.7:0.5:0.1:1.0, and a weight and a pressed density of the prepared cathode were 18.1 mg/cm$^2$ and 3.72 g/cc, respectively.

Except for this, an anode was prepared and a battery was manufactured in the same manner as that of Example 1.

## Comparative Example 3

An anode was prepared in the same manner as that of Example 1, except that an anode slurry was prepared by mixing an artificial graphite anode active material (D50: 13 pm), a silicon-based anode active material, a CMC thickener, an SBR binder, a multi-walled carbon nanotube (MWCNT) conductive material, and a dispersant at a weight ratio of 90.8:6.0:1.3:1.3:0.5:0.1 and using water as a solvent.

A cathode was prepared in the same manner as that of Example 1, except that a cathode slurry was prepared by mixing an active material C having a Ni content of 88% as a cathode active material, a multi-walled carbon nanotube (MWCNT) as a cathode conductive material, a dispersant, and polyvinylidene fluoride (PVdF) as a cathode binder at a weight ratio of 98.4:0.5:0.1:1.0, and a weight and a pressed density of the prepared cathode were 17.2 mg/cm$^2$ and 3.71 g/cc, respectively.

Except for this, an anode was prepared and a battery was manufactured in the same manner as that of Example 1.

## Comparative Example 4

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 90.55:6.0:1.5:1.7:0.1:0.15 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) as a cathode conductive material, a dispersant, and polyvinylidene fluoride (PVdF) as a cathode binder at a weight ratio of 78.7:19.7:0.5:0.1:1.0, and a weight and a pressed density of the prepared cathode were 20.8 mg/cm$^2$ and 3.73 g/cc, respectively.

Except for this, an anode was prepared and a battery was manufactured in the same manner as that of Example 1.

**Comparative Example 5**

An anode was prepared in the same manner as that of Example 1, except that an anode slurry was prepared by mixing an artificial graphite anode active material (D50: 13 pm), a silicon-based anode active material, a CMC thickener, an SBR binder, a single-walled carbon nanotube (SWCNT) conductive material, and a dispersant at a weight ratio of 90.75:6.0:1.3:1.7:0.1:0.15 and using water as a solvent.

A cathode was prepared in the same manner as that of Example 1, except that a cathode slurry was prepared by mixing an active material A having a Ni content of 88% and an active material B having a Ni content of 83% as cathode active materials, a multi-walled carbon nanotube (MWCNT) as a cathode conductive material, a dispersant, and polyvinylidene fluoride (PVdF) as a cathode binder at a weight ratio of 78.7:19.7:0.5:0.1:1.0, and a weight and a pressed density of the prepared cathode were 20.8 mg/cm$^2$ and 3.73 g/cc, respectively.

Except for this, an anode was prepared and a battery was manufactured in the same manner as that of Example 1.

**Evaluation of Cell Resistance and Capacity Retention Rate**

Each of the values shown in Table 1 was measured and derived according to the following methods.

(Measurement Methods)

\* Bulk Resistance $A_R$ of Anode and Bulk Resistance $C_R$ of Cathode

A bulk resistance $A_R$ of the anode and a bulk resistance $C_R$ of the cathode were measured with an electrode resistance measuring instrument (XF057, manufactured by Hioki E.E. Corporation) under conditions of a measurement current of 10 mA and a measurement voltage of 0.5 V.

\* Interfacial Resistance $C_{IR}$ Between Cathode Active Material Layer and Cathode Current Collector

An interfacial resistance $C_{IR}$ between the cathode active material layer and the cathode current collector was measured with the electrode resistance measuring instrument (XF057, manufactured by Hioki E.E. Corporation) under conditions of a measurement current of 100 uA or 1 mA and a measurement voltage of 1 V or 10 V.

\* $C_P$ (= 1 - D/4.7) of Cathode

A pressed density D of the cathode was calculated by measuring a weight and a thickness of a unit area of the pressed electrode. $C_P$ was derived from the result value obtained by substituting the value of D derived by the above method into "1-D/4.7".

\* Adhesive Force $C_A$ Between Cathode Active Material Layer and Cathode Current Collector

An adhesive force $C_A$ between the cathode active material layer and the cathode current collector was measured with an adhesive force measuring instrument (DS2-50N, manufactured by Imada, Inc.) for the electrode and the substrate. A double-sided tape was attached to an adhesive force measuring jig, a side of the prepared cathode current collector was placed on the tape, and then a roller was reciprocated 10 times to attach the cathode to the tape. Thereafter, the tape was cut to a width of 18 mm and attached to the central portion of the measuring jig so that the tape surface faced down. Thereafter, an adhesive force to the cathode active material layer was measured while moving the adhesive force measuring instrument at a speed of 300 rpm.

\* $K_1$

A value of $K_1$ was derived by substituting the measured values of $A_R$, $C_R$, $C_{IR}$, $C_A$, and $C_P$ into the following Expression (1). The derived value of $K_1$ is shown in Table 1.

$$(1) \quad (200*A_R + C_R + 20*C_{IR})*(1 + C_A)/C_P$$

\* $K_2$

A value of $K_2$ was derived by substituting the measured values of $A_R$, $C_R$, and $C_{IR}$ into the following Expression (2). The derived value of $K_2$ is shown in Table 1.

$$(2) \quad 200 * A_R + (C_R + 10 * C_{IR})$$

\* DC-IR - Cell Resistance

A cell resistance of the secondary battery of each of Examples and Comparative Examples was measured. The cell resistance was measured by the following method. The secondary batteries of Examples and Comparative Examples were charged (0.3 C, CC/CV charging, 4.2 V, cut at 0.05 C), allowed to rest for 10 minutes, and then discharged (0.3 C, CC discharging, cut at SOC 50%). The secondary batteries were allowed to rest at SOC 50% for 1 hour, discharged at 1 C for 10 seconds, and then allowed to rest again for 10 seconds. At this time, a cell resistance (DC-IR) was calculated by dividing a difference between the voltage after the end of the discharging and the voltage after the rest for 10 seconds by the current. The results thereof are shown in Table 1.

\* Capacity Retention Rate

The secondary batteries of Examples and Comparative Examples were evaluated for general charge lifespan characteristics in a chamber maintained at 35°C in a range of DOD 94% (SOC 2% to 96%). The secondary batteries were charged at 0.3 C to a voltage corresponding to SOC 96% under constant current/constant voltage (CC/CV) conditions, and then cut-off at 0.05 C, the secondary batteries were discharged at 0.3 C to a voltage corresponding to SOC 2% under a constant current (CC) condition, and then, a discharge capacity thereof was measured. 500 cycles of the charging and discharging were repeated, and then a discharge capacity retention rate in the evaluation of (general) charge lifespan characteristics was measured. The results thereof are shown in Table 1.

[Table 1]

|  | $A_R$ ($\Omega \cdot$cm) | $C_R$ ($\Omega \cdot$cm) | $C_{IR}$ ($\Omega \cdot$cm$^2$) | $C_P$ | $C_A$ (N/ 18 mm) | $K_1$ | $K_2$ | DC-IR (a.u.) | Capacity retention rate (%) |
|---|---|---|---|---|---|---|---|---|---|
| Comparative Example 1 | 0.035 | 8.00 | 0.040 | 0.219 | 0.44 | 104 | 15.4 | 1.15 | 53.0 |
| Comparative Example 2 | 0.035 | 6.00 | 0.170 | 0.209 | 0.44 | 113 | 14.7 | 1.17 | 55.0 |
| Comparative Example 3 | 0.035 | 9.00 | 0.100 | 0.211 | 0.51 | 129 | 17 | 1.15 | 81.3 |
| Example 1 | 0.023 | 18.00 | 0.090 | 0.211 | 0.49 | 172 | 23.5 | 1.27 | 92.8 |
| Example 2 | 0.023 | 14.00 | 0.070 | 0.204 | 0.49 | 146 | 19.3 | 1.28 | 92.0 |
| Example 3 | 0.033 | 13.00 | 0.060 | 0.204 | 0.63 | 166 | 20.2 | 1.27 | 96.1 |
| Example 4 | 0.026 | 15.00 | 0.100 | 0.206 | 0.55 | 167 | 21.2 | 1.35 | 93.8 |
| Example 5 | 0.039 | 18.00 | 0.090 | 0.189 | 0.54 | 224 | 26.7 | 1.41 | 92.0 |
| Example 6 | 0.038 | 18.00 | 0.090 | 0.189 | 0.52 | 220 | 26.5 | 1.3 | 93.0 |
| Comparative Example 4 | 0.051 | 11.00 | 0.900 | 0.206 | 0.51 | 287 | 30.2 | 1.56 | 91.8 |
| Comparative Example 5 | 0.046 | 11.00 | 0.900 | 0.206 | 0.49 | 276 | 29.2 | 1.55 | 91.9 |

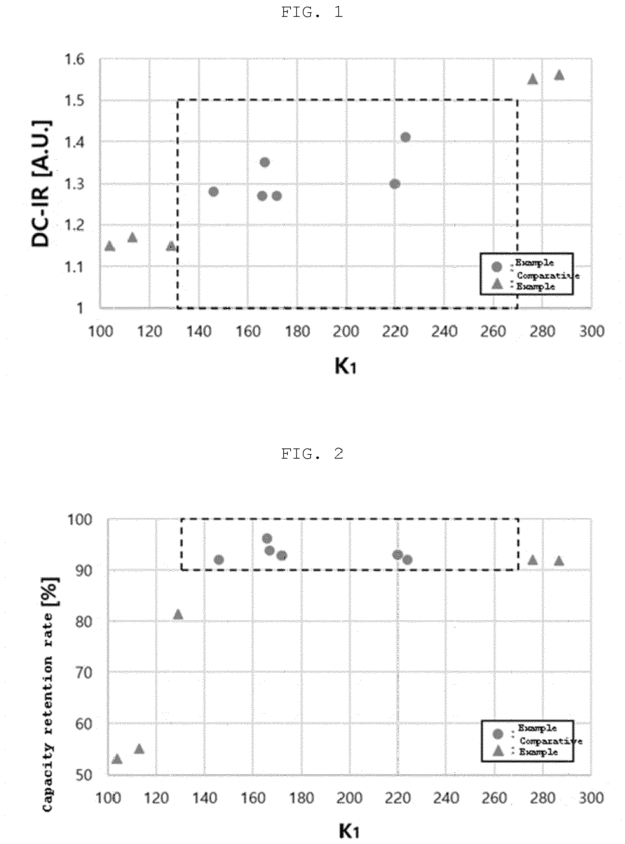

Hereinafter, each of Examples and Comparative Examples was evaluated with reference to Table 1 and FIGS. 1 to 3. Referring to Table 1 and FIGS. 1 and 2, it could be appreciated that as the value of $K_1$ was decreased, the cell resistance (DC-IR) was decreased, but in Comparative Examples 1 to 3 in which the value of $K_1$ or the value of $K_2$ was too low, the capacity retention rate was rapidly decreased to less than 85%. In Comparative Examples 4 and 5 in which the value of $K_1$ or the value of $K_2$ was too high, the capacity retention rate was 90% or more, but the cell resistance was too high compared to Examples. Unlike Comparative Examples, Examples satisfied the range of the value of $K_1$ or the value of $K_2$ limited by the present exemplary embodiment, and thus, the cell resistance was low and the capacity retention rate was 90% or more. As a result, excellent cycle life characteristics were secured.

In particular, referring to FIG. 1, it could be appreciated that since the cell resistance tended to be increased as the value of $K_1$ was increased, a decrease in the value of $K_1$ was advantageous for decreasing the cell resistance. However, referring to FIG. 2, it could be confirmed that the capacity retention rate was rapidly changed, in particular, at the boundary where the value of $K_1$ was 130, and when the value of $K_1$ was less than 130, the capacity retention rate was rapidly decreased. Referring to FIGS. 1 and 2, it could be appreciated that a secondary battery having a low cell resistance and excellent lifespan characteristics was secured by controlling the value of $K_1$ to 130 to 270 as in the present exemplary embodiment. In addition, in particular, referring to FIGS. 1 and 2, since the capacity retention rate is most excellent when the value of $K_1$ is near 170 and the cell resistance tends to be increased as the value of $K_1$ is increased, preferably, the value of $K_1$ may be 130 to 250, 130 to 230, 140 to 250, or 140 to 230.

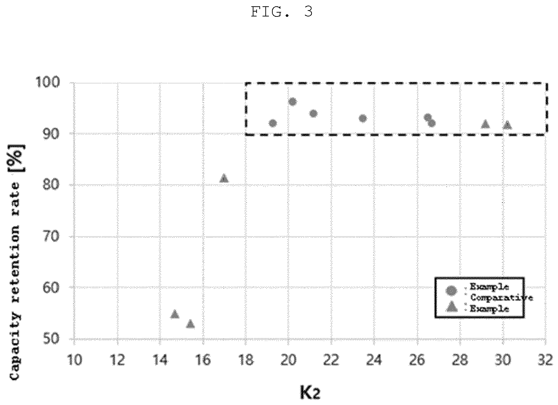

Referring to FIG. 3, it could be confirmed that the capacity retention rate was rapidly changed, in particular, at the boundary where the value of $K_2$ was 18.0, and when the value of $K_2$ was less than 18.0, the capacity retention rate was rapidly decreased. Referring to FIG. 3, it could be appreciated that as in the present exemplary embodiment, a secondary battery having excellent lifespan characteristics was secured by controlling the value of $K_2$ to 18.0 or more. In addition, in particular, referring to FIG. 3, since the capacity retention rate is most excellent when the value of $K_2$ is near 20.0, preferably, the value of $K_2$ may be 18.5 or more or 19.0 or more.

As set forth above, according to the present disclosure, a secondary battery having a low cell resistance and excellent lifespan characteristics may be provided by controlling a value of $K_1$ represented by the following Expression (1) to 130 to 270:

$$(1) \quad (200 * A_R + C_R + 20 * C_{IR}) * (1 + C_A) / C_P$$

in Expression (1), $A_R$ is a bulk resistance ($\Omega \cdot cm$) of an anode, $C_R$ is a bulk resistance ($\Omega \cdot cm$) of a cathode, $C_{IR}$ is an interfacial resistance ($\Omega \cdot cm^2$) between a cathode active material layer and a cathode current collector, $C_P$ is 1 - D/4.7, D is a pressed density (g/cc) of the cathode, and $C_A$ is an adhesive force (N/18 mm) between the cathode active material layer and the cathode current collector.

According to the present disclosure, since the cycle life and the cell resistance of the battery may be predicted only by evaluating the physical properties of the prepared electrodes, the industrial effect is excellent because the cycle life may be easily predicted without actually assembling and driving the battery and evaluating the cycle life for a long time.

Although the Examples of the present exemplary embodiment have been described above, the exemplary embodiment is not limited to the Examples, but may be made in various different forms, and those skilled in the art to which the present disclosure pertains will understand that the present disclosure may be implemented in other specific forms without departing from the spirit or essential feature of the present disclosure. Therefore, it is to be understood that the Examples described hereinabove are illustrative rather than restrictive in all aspects.

**Claims**

1. A secondary battery comprising:

a cathode including a cathode current collector and a cathode active material layer formed on at least one surface of the cathode current collector; and
an anode including an anode current collector and an anode active material layer formed on at least one surface of the anode current collector,
wherein a value of $K_1$ represented by the following Expression (1) is 130 to 270:

$$(1) \quad (200 * A_R + C_R + 20 * C_{IR}) * (1 + C_A) / C_P$$

in Expression (1), $A_R$ is a bulk resistance ($\Omega \cdot cm$) of the anode, $C_R$ is a bulk resistance ($\Omega \cdot cm$) of the cathode, $C_{IR}$ is an interfacial resistance ($\Omega \cdot cm^2$) between the cathode active material layer and the cathode current collector, $C_P$ is 1 - D/4.7, D is a pressed density (g/cc) of the cathode, and $C_A$ is an adhesive force (N/18 mm) between the cathode active material layer and the cathode current collector.

2. The secondary battery of claim 1, wherein a value of $K_2$ represented by the following Expression (2) is 18.0 or more:

$$(2)\ \ 200*A_R\ +\ (C_R\ +\ 10*C_{IR})$$

in Expression (2), $A_R$ is a bulk resistance ($\Omega\cdot$cm) of the anode, $C_R$ is a bulk resistance ($\Omega\cdot$cm) of the cathode, and $C_{IR}$ is an interfacial resistance ($\Omega\cdot$cm$^2$) between the cathode active material layer and the cathode current collector.

3. The secondary battery of any one of claims 1 to 2, wherein the bulk resistance $A_R$ of the anode is 0.005 to 0.2 $\Omega\cdot$cm.

4. The secondary battery of any one of claims 1 to 3, wherein the bulk resistance $C_R$ of the cathode is 1 to 100 $\Omega\cdot$cm.

5. The secondary battery of any one of claims 1 to 4, wherein the interfacial resistance $C_{IR}$ between the cathode active material layer and the cathode current collector is 0.01 to 1.0 $\Omega\cdot$cm$^2$.

6. The secondary battery of any one of claims 1 to 5, wherein the adhesive force $C_A$ between the cathode active material layer and the cathode current collector is 0.05 to 2.0 N/18 mm.

7. The secondary battery of any one of claims 1 to 6, wherein the pressed density D of the cathode is 3.00 to 3.90 g/cc.

FIG. 1

FIG. 2

FIG. 3

Europäisches
Patentamt

European
Patent Office

Office européen
des brevets

## EUROPEAN SEARCH REPORT

Application Number

EP 22 21 6466

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 786 949 A (NINGDE CONTEMPORARY AMPEREX TECH CO LTD) 11 May 2021 (2021-05-11) * paragraphs [0076] - [0078] * & EP 3 951 977 A1 (CONTEMPORARY AMPEREX TECHNOLOGY CO LTD [CN]) 9 February 2022 (2022-02-09) ----- | 1-7 | INV. H01M10/052 ADD. H01M4/02 |
| X | KR 2021 0040804 A (LG CHEMICAL LTD [KR]) 14 April 2021 (2021-04-14) * example 1; table 2 * & US 2022/216480 A1 (KIM TAE GON [KR] ET AL) 7 July 2022 (2022-07-07) ----- | 1-7 | |

TECHNICAL FIELDS
SEARCHED    (IPC)

H01M

The present search report has been drawn up for all claims

| Place of search | Date of completion of the search | Examiner |
|---|---|---|
| Munich | 13 June 2023 | Gregori, Giuliano |

EPO FORM 1503 03.82 (P04C01)

## ANNEX TO THE EUROPEAN SEARCH REPORT
## ON EUROPEAN PATENT APPLICATION NO.

EP 22 21 6466

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2023

| Patent document cited in search report | | Publication date | Patent family member(s) | | Publication date |
|---|---|---|---|---|---|
| CN 112786949 | A | 11-05-2021 | CN | 112786949 A | 11-05-2021 |
| | | | EP | 3951977 A1 | 09-02-2022 |
| | | | US | 2022093921 A1 | 24-03-2022 |
| | | | WO | 2021088718 A1 | 14-05-2021 |
| KR 20210040804 | A | 14-04-2021 | CN | 113785413 A | 10-12-2021 |
| | | | EP | 3951932 A1 | 09-02-2022 |
| | | | KR | 20210040804 A | 14-04-2021 |
| | | | US | 2022216480 A1 | 07-07-2022 |
| | | | WO | 2021066560 A1 | 08-04-2021 |

EPO FORM P0459

For more details about this annex : see Official Journal of the European Patent Office, No. 12/82